# EUROPÄISCHE PATENTSCHRIFT

(11) **EP 3 472 086 B1**
(45) Veröffentlichungstag und Bekanntmachung des Hinweises auf die Patenterteilung: **07.06.2023**
(21) Anmeldenummer: 17730480.5
(22) Anmeldetag: 16.06.2017
(51) Int. Cl.: B66C 1/66

(54) **ANSCHLAGPUNKT ZUM EINSETZEN IN EINE HINTERSCHNITTENE ÖFFNUNG**
STOP POINT FOR INSERTING INTO AN UNDERCUT OPENING
POINT D'ACCROCHAGE DESTINÉ À ÊTRE INSÉRÉ DANS UNE OUVERTURE RAINURÉE

(30) Priorität: 21.06.2016 DE 102016211078
(43) Veröffentlichungstag der Anmeldung: 24.04.2019
(73) Patentinhaber: RUD Ketten Rieger & Dietz GmbH u. Co. KG, 73432 Aalen (DE)
(72) Erfinder: BETZLER, Michael, 73453 Abtsgmünd (DE); WENDLER, Andreas, 73433 Aalen (DE)
(74) Vertreter: Grünecker Patent- und Rechtsanwälte PartG mbB
(86) Internationale Anmeldenummer: PCT/EP2017/064741
(87) Internationale Veröffentlichungsnummer: WO 2017/220438

(56) Entgegenhaltungen:
- DE-A1-102010 029 536
- DE-U1- 8 814 211
- FR-A1- 2 677 969
- US-A1- 2013 020 819
- US-B1- 9 233 816

## Beschreibung

Die Erfindung betrifft einen Anschlagpunkt zum Einsetzen in eine hinterschnittene Öffnung, wobei der Anschlagpunkt einen Anschlagbereich zum Anschlagen eines Zurr-, Hebe- oder Anschlagmittels, einen sich entlang einer Schaftlängsachse von dem Anschlagbereich weg erstreckenden Schaft zum Einsetzen in die Öffnung und, am von dem Anschlagbereich abgewandten Ende des Schaftes, einen quer zur Schaftlängsachse vorspringenden Haltevorsprung aufweist, wobei der Haltevorsprung unbeweglich mit dem Schaft verbunden ist und wobei der Anschlagpunkt zwischen dem Haltevorsprung und dem Anschlagbereich wenigstens ein Abstützorgan aufweist, wobei der Haltevorsprung und das wenigstens eine Abstützorgan relativ zueinander beweglich sind.

Anschlagpunkte zum Einsetzen in hinterschnittene Öffnungen sind bekannt. Diese können einerseits zum Heben oder Verzurren von Lasten, aber auch zum Sichern von Lasten oder Personen dienen. Beispielsweise bei Arbeiten an Fassaden oder auf Dächern ist es oft wünschenswert, wenn ein Anschlagpunkt nicht fest an einem Objekt wie einem Bauwerk montiert ist. Aus diesem Grund werden Anschlagpunkte zum Einsetzen verwendet, welche schnell und einfach in eine hinterschnittene Öffnung eingesetzt werden können. Bevorzugt lassen sich die Anschlagpunkte auch schnell und einfach wieder aus der Öffnung entnehmen. Die Öffnung kann eine Bohrung sein, deren Querschnitt sich an einer Stelle erweitert, so dass ein Hinterschnitt gebildet ist. Ebenso kann es möglich sein, dass zunächst eine passende Hülse in ein Bohrloch in einem Objekt wie einer Wand oder einer Decke eingesetzt wird, damit eine Öffnung mit einem passenden Innendurchmesser und einem Hinterschnitt für den Anschlagpunkt vorhanden ist.

Die bekannten Anschlagpunkte weisen in der Regel zum Ineinandergreifen mit einem Hinterschnitt einer Öffnung am dem Anschlagbereich abgewandten Ende des Schaftes sich gegenüberliegende quer zur Schaftlängsachse auslenkbare Elemente wie Kugeln oder Zylinder auf. Diese können während des Einsetzens des Schaftes in die Öffnung in einem Schaftinneren angeordnet sein und beim Erreichen einer Endposition aus dem Schaftinneren ausgelenkt werden, so dass diese über den Schaft überstehen und in einem Hinterschnitt der Öffnung angeordnet sind. Dadurch ist der Anschlagpunkt in der Öffnung gesichert. Nachteilig bei diesen bekannten Formen von Anschlagpunkten ist jedoch, dass die auslenkbaren Elemente, welche in den Hinterschnitt der Öffnung ragen und den Anschlagpunkt dort halten, nur unzureichend axial, also parallel zur Schaftlängsachse, belastbar sind. Insbesondere kann eine Zugbelastung des Anschlagpunktes zur Deformation der Elemente und/oder entsprechender Gegenstücke im Schaftinneren führen, so dass der Anschlagpunkt aus der Öffnung herausgelöst wird.

In der DE10 2010 029 536 A1, die einen Anschlagpunkt gemäß dem Oberbegriff des Anspruchs 1 offenbart, ist ein Verfahren zum Heben von Lasten und eine Hebevorrichtung dafür beschrieben. Die Hebevorrichtung weist ein radial ausschwenkbares Element auf, welches nach dem Ausschwenken einen Hinterschnitt in der Hebeeinrichtung derart hintergreift, dass eine Verriegelung oder ein Kraftschluss in Heberichtung erfolgt.

Weitere Anschlagpunkte zum Einsetzen in hinterschnittene Öffnungen sind in der US 9,233,816 B1, DE 88 14 211 U1, US 2913/0020819 A1 und FR 2 677 969 A1 gezeigt.

Es ist daher die Aufgabe der Erfindung, einen Anschlagpunkt der oben genannten Art bereitzustellen, dessen axiale Belastbarkeit verbessert ist, und der dabei gleichzeitig leicht zu handhaben und günstig herzustellen ist.

Für einen Anschlagpunkt der oben genannten Art ist die erfindungsgemäße Aufgabe dadurch gelöst, dass das wenigstens eine Abstützorgan quer zur Schaftlängsachse relativ zum Schaft beweglich ausgebildet ist..

Im Gegensatz zum bekannten Stand der Technik weist der erfindungsgemäße Anschlagpunkt also keinen beweglichen oder auslenkbaren Haltevorsprung auf. Die unbewegliche, also feststehende, Verbindung des Haltevorsprungs mit dem Schaft führt zu einer hohen Stabilität des Haltevorsprungs und damit zu einer hohen axialen Belastbarkeit. Um ein ungewolltes Herauslösen des Anschlagpunktes aus der hinterschnittenen Öffnung zu vermeiden, weist der Anschlagpunkt zwischen dem Haltevorsprung und dem Anschlagbereich wenigstens ein Abstützorgan auf, wobei der Haltevorsprung und das wenigstens eine Abstützorgan relativ zueinander beweglich sind. Das wenigstens eine Abstützorgan kann nach dem Einsetzen des Anschlagpunkts in eine hinterschnittene Öffnung zwischen einer Innenwandung der Öffnung und dem übrigen Anschlagpunkt, bzw. dem Schaft angeordnet sein, so dass eine Bewegung des Anschlagpunktes, insbesondere des Schaftes in der Öffnung, quer zur Schaftlängsrichtung verhindert wird. Dadurch kann der Haltevorsprung am Ende des Schaftes sicher in den Hinterschnitt der Öffnung greifen und selbst nicht in die Öffnung hineinrutschen. Der Begriff Innenwand der Öffnung bezieht sich auf eine die Öffnung umgebende bzw. die Öffnung freigebende Wand.

Die erfindungsgemäße Lösung kann durch verschiedene, jeweils für sich vorteilhafte, beliebig miteinander kombinierbare Ausgestaltungen weiter verbessert werden. Auf diese Ausgestaltungsformen und die mit ihnen verbundenen Vorteile ist im Folgenden eingegangen.

Gemäß einer ersten vorteilhaften Ausgestaltung kann der Haltevorsprung monolithisch mit dem Schaft gebildet sein. Dadurch kann besonders einfach eine unbewegliche Verbindung hergestellt sein. Monolithisch bedeutet dabei, dass der Haltevorsprung nicht zunächst als separates Teil gefertigt und nachträglich an dem Schaft angebracht wurde.

Gemäß einer weiteren vorteilhaften Ausgestaltung kann der Schaft unbeweglich mit dem Anschlagbereich verbunden sein. Insbesondere können der Anschlagbereich und der Schaft dabei monolithisch gebildet sein. Dabei ist der Schaft bevorzugt nicht zunächst als separates Teil gefertigt und nachträglich mit dem Anschlagbereich verbunden.

Der genannte Anschlagbereich des Anschlagpunktes kann zum Anschlagen eines Zurr-, Hebe- oder Anschlagmittels dienen. Dazu kann dieser beispielsweise eine Öse aufweisen. Alternativ dazu kann der Anschlagbereich anstelle einer Öse auch einen Haken, einen Karabiner, einen Schäkel oder eine Anschlussstelle zur Verbindung mit einem anderen Teil aufweisen.

Der Anschlagbereich kann auch gegenüber dem Schaft drehbar gelagert sein. Beispielsweise kann ein Lager zwischen dem Anschlagbereich und dem Schaft angeordnet sein, welches die Drehbarkeit ermöglicht. Insbesondere kann der Anschlagpunkt ein Wälzlager oder ein Gleitlager aufweisen. Dazu kann der Anschlagpunkt eine Lagerhülse besitzen, durch welche der Schaft ragt und die wiederum vom Anschlagbereich umgeben ist.

Vorteilhaft ist es, wenn der Anschlagbereich, der Schaft und der Haltevorsprung unbeweglich zueinander sind. Diese drei Elemente können auch einstückig miteinander ausgebildet sein. Beispielsweise kann der Anschlagpunkt als Schmiedeteil gebildet sein. Die Umformung eines Ausgangsmaterials durch Schmieden kann zu einer hohen Tragfähigkeit des Anschlagpunktes führen, so dass insbesondere die axiale Belastbarkeit besonders im Bereich des Haltevorsprungs verbessert sein kann.

Alternativ dazu kann der Anschlagpunkt auch als Gussteil gebildet oder durch andere geeignete Verfahren hergestellt sein.

Der Haltevorsprung des erfindungsgemäßen Anschlagpunkts ist bevorzugt exzentrisch zum Schaft ausgebildet. Auf diese Weise kann ein einfach aufgebauter und gleichzeitig belastbarer Haltevorsprung erhalten werden. Insbesondere kann der Haltevorsprung einen kreisrunden Querschnitt aufweisen und durch die Exzentrizität quer zur Schaftlängsachse zum übrigen Schaft versetzt sein.

Besonders sicher kann der Anschlagpunkt in der Öffnung gehalten sein, wenn eine Haltestellung vorhanden ist, in der das wenigstens eine Abstützorgan und der Haltevorsprung sich diametral bezüglich der Schaftlängsachse gegenüberliegend angeordnet sind.

Das wenigstens eine Abstützorgan kann in der Haltestellung beispielsweise so angeordnet sein, dass es gegen die Innenwand drückt oder gedrückt ist. Dadurch kann der Anschlagpunkt zusätzlich zum Formschluss noch kraftschlüssig gehalten sein. Insbesondere kann eine Drehung des Anschlagpunktes um die Schaftlängsachse verhindert sein.

Alternativ dazu kann das wenigstens eine Abstützorgan in einer Haltestellung auch nur lose an der Innenwand der Öffnung anliegen um eine Verkippung des Anschlagpunktes in der Öffnung zu verhindern. Dadurch kann der Anschlagpunkt um die Schaftlängsachse drehbar in der Öffnung gehalten sein.

Es kann eine Sperreinrichtung vorgesehen sein, durch die der Anschlagpunkt in der Haltestellung gesichert ist. Die Sperreinrichtung kann beispielsweise dafür sorgen, dass das Abstützorgan in der Haltestellung verbleibt, so dass die Funktion des Abstützorgans gewährleistet ist.

Um ein Verkippen des Anschlagpunktes quer zur Schaftlängsachse zu vermeiden, und um die Halterung des Anschlagpunktes in der Öffnung zu verbessern, kann der Schaft wenigstens zwei entlang der Schaftlängsachse voneinander beabstandete Abstützorgane aufweisen.

Die zwei Abstützorgane können den Anschlagpunkt dann besonders gut abstützen, bzw. dessen Position sichern, wenn ein erstes Abstützorgan an einer schaftseitigen Auflagefläche des Anschlagbereichs und ein zweites Abstützorgan an dem Haltevorsprung angeordnet ist. Mit anderen Worten sollten die Abstützorgane möglichst nah an diesen Elementen angeordnet sein. Dadurch sind die Abstützorgane in einem eingesetzten Zustand des Anschlagpunktes in der Nähe der sich gegenüberliegenden Enden der Öffnung angeordnet. Liegen dann die Abstützorgane an einer inneren Wand der Öffnung an, oder drücken gegen diesen, kann ein Verkippen des Anschlagpunkts in der Öffnung wirksam verhindert werden. Um die Abstützorgane möglichst nah an der Auflagefläche bzw. an dem Haltevorsprung anzuordnen, sind diese bevorzugt nicht mehr als ein Fünftel eines Schaftdurchmessers von diesen Elementen beabstandet.

Um das Einsetzen des Anschlagpunktes in die hinterschnittene Öffnung zu erleichtern und um einen möglichst kompakten Anschlagpunkt bereitzustellen, kann das wenigstens eine Abstützorgan aus dem Schaft heraus bewegbar sein. Das heißt, zum Einsetzen des Anschlagpunktes in die Öffnung kann das wenigstens eine Abstützorgan soweit in den Schaft hinein bewegt werden, dass der Anschlagpunkt die Öffnung passieren kann. Ist der Anschlagpunkt in der Öffnung eingesetzt, kann das Abstützorgan aus dem Schaft heraus bewegt werden, so dass es an eine Innenwand der Öffnung anliegen oder angedrückt sein kann. Insbesondere kann das wenigstens eine Abstützorgan dazu eine Wand des Schafts quer zur Schaftlängsachse durchdringen. Der Schaft kann dazu wenigstens eine Durchdringungsöffnung für das wenigstens eine Abstützorgan aufweisen. Bevorzugt durchdringt das wenigstens eine Abstützorgan den Schaft so, dass es unverlierbar an diesem gehalten ist um einen Verlust des wenigstens einen Abstützorgans zu vermeiden.

Um ein besonders wirksames Andrücken des wenigstens einen Abstützorgans gegen eine Wandung der Öffnung zu erreichen, kann das wenigstens eine Abstützorgan an einer Außenseite die Form einer Zylindermantelfläche aufweisen. Diese kann insbesondere so geformt sein, dass sie im Wesentlichen nahtlos an einer Innenwand der Öffnung anliegen kann. Dazu kann beispielsweise der Radius des Zylinders in etwa dem Radius der Öffnung entsprechen.

Um das wenigstens eine Abstützorgan von außen zu betätigen bzw. zu steuern, kann der Anschlagpunkt ein am Anschlagbereich zugängliches Betätigungsorgan aufweisen, welches kraftübertragend mit dem wenigstens einen Abstützorgan gekoppelt ist. Beispielsweise kann das Betätigungsorgan so ausgebildet sein, dass es zwischen einer Einsetzstellung und einer Haltestellung bewegbar ist. Vor dem Einsetzen des Anschlagpunkts in die Öffnung kann das Betätigungsorgan in die Einsetzstellung gebracht werden, so dass das wenigstens eine Abstützorgan nicht in der Haltestellung angeordnet ist. Dann kann der Anschlagpunkt leicht in die Öffnung eingesetzt werden. Ist der Anschlagpunkt in der Öffnung eingesetzt, kann das Betätigungsorgan betätigt werden bzw. in die Haltestellung überführt werden, wobei eine Kraft auf das wenigstens eine Abstützorgan ausgeübt wird und dieses ebenfalls in die Haltestellung bringt. Dann liegt das wenigstens eine Abstützorgan an der Innenwand der Öffnung an oder ist gegen diese gedrückt und sichert so in beiden den Anschlagpunkt in der Öffnung.

Ein besonders kompakter Anschlagpunkt kann dadurch erhalten werden, dass das wenigstens eine Betätigungsorgan als im Schaftinneren angeordnete Welle ausgebildet ist, deren Drehachse koaxial mit der Schaftlängsachse ausgebildet ist. Eine Drehbewegung des Betätigungsorgans, also eine Rotation um die Schaftlängsachse, kann dann in eine Bewegung des wenigstens einen Abstützorgans umgesetzt werden. Ist das Abstützorgan so ausgestaltet, dass es aus dem Schaft heraus quer zur Schaftlängsachse bewegbar ist, so kann die Rotation des Betätigungsorgans zu einer Translation des wenigstens einen Abstützorgans quer zur Schaftlängsachse führen.

Die Welle, die insbesondere stiftförmig sein kann, kann zur Kraftübertragung an das wenigstens eine Abstützorgan zumindest in wenigstens einem Kraftübertragungsabschnitt einen von einer Kreisform abweichenden Querschnitt aufweisen. Beispielsweise kann der Querschnitt elliptisch sein.

Die Welle kann, in einem Längsschnitt gesehen, wenigstens eine Ausnehmung aufweisen, in der der Querschnitt verkleinert ist. Die Ausnehmung kann eine Querschnittsabflachung, in einem Querschnitt quer zur Schaftlängsachse gesehen, bilden. Dadurch kann insbesondere wenigstens ein Abstützorgan, welches aus dem Schaft heraus bewegbar ist, bewegt werden. In einer Einsetzstellung kann wenigstens ein Abstützorgan in der Ausnehmung in der Welle angeordnet sein, so dass das Abstützorgan ausreichend weit im Schaft angeordnet ist, um diesen in die Öffnung einzusetzen. Um den Anschlagpunkt in der Öffnung zu fixieren, kann eine Drehung des Betätigungsorgans dazu führen, dass die Rotation des Kraftübertragungsabschnitts das Abstützorgan aus dem Schaft heraus bewegt. In einer Haltestellung ist das Abstützorgan bevorzugt so angeordnet, dass es an einem nicht abgeflachten Bereich der Welle anliegt. Alternativ dazu kann die Welle in dem wenigstens einen Kraftübertragungsabschnitt auch exzentrisch gebildet sein.

Die Abstützorgane können an ihren Rückseiten sich quer zur Schaftlängsachse erstreckende Querschnittsverbreiterungen aufweisen, welche dazu dienen können, ein Herausfallen der Abstützorgane aus dem Schaft, bzw. durch die Durchdringungsöffnungen zu verhindern. Als Gegenstücke zu den Querschnittsverbreiterungen kann der Schaft im Bereich der wenigstens einen Durchdringungsöffnung Abdrückungen aufweisen, welche durch Formschluss mit den Querschnittsverbreiterungen verhindern, dass das Abstützorgan aus dem Schaft herausfällt. Diese können nach dem Einsetzen des Abstützorgans in die Durchdringungsöffnung am Schaft geformt sein.

Zur besonders einfachen Bedienung des Betätigungsorgans kann dieses einen sich radial von der Schaftlängsachse weg erstreckenden Hebel aufweisen, welcher im Anschlagbereich zugänglich ist. Dazu kann der Anschlagpunkt beispielsweise im Anschlagbereich wenigstens ein Fenster aufweisen, durch welches der Hebel des Betätigungsorgans nach außen ragt. Der Schlitz des Fensters kann dabei insbesondere quer zur Schaftlängsachse verlaufen.

Um die Sicherheit des Anschlagpunktes zu erhöhen, kann der Anschlagpunkt wenigstens ein Rückstellorgan aufweisen, welches mit dem wenigstens einen Betätigungsorgan gekoppelt ist und durch das das Betätigungsorgan in die Haltestellung bewegbar ist. Dadurch kann die Haltestellung als Vorzugsstellung ausgewählt sein, so dass, wenn keine externe Kraft auf das Betätigungsorgan ausgeübt wird, dasselbe durch das Rückstellorgan stets in die Haltestellung bewegt wird. Das Rückstellorgan kann eine Sperreinrichtung des Anschlagpunktes darstellen.

Ein besonders einfach aufgebautes Rückstellorgan kann dadurch erhalten werden, dass es als im Schaftinneren angeordnete Feder ausgebildet ist, die, eine Federkraft vermittelnd, sowohl mit dem Schaft als auch mit dem Betätigungsorgan verbunden ist. Die Feder kann derart vorgespannt sein, dass sie stets eine Federkraft in Richtung der Haltestellung erzeugt.

Weist der Anschlagpunkt einen zum Betätigungsorgan gehörenden Hebel auf, welcher im Anschlagbereich von außen zugänglich ist, so kann der Anschlagpunkt auch alternativ oder zusätzlich zu einer innenliegenden Feder eine außenliegende Feder aufweisen, welche im Bereich zwischen einem schlitzförmigen Fenster des Anschlagpunkts und der Auflagefläche des Anschlagbereichs angeordnet ist. Die Feder kann dann mit einem Ende an dem Hebel befestigt, und mit einem anderen Ende am Anschlagpunkt befestigt sein. Die Feder kann derart vorgespannt sein, dass diese eine Federkraft in Richtung der Haltestellung ausübt. Besonders bevorzugt ist die Feder dabei als Spiralfeder ausgebildet, welche wenigstens einmal um eine Mantelfläche des Anschlagpunktes gewickelt ist.

Im Folgenden ist die Erfindung beispielhaft anhand vorteilhafter Ausführungsformen mit Bezug auf die Zeichnungen näher erläutert. Die bei den Ausführungsformen beispielhaft dargestellten Merkmalskombinationen können nach Maßgabe der obigen Ausführungen entsprechend für einen bestimmten Anwendungsfall durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen werden für Elemente gleicher Funktion und/oder gleichen Aufbaus stets dieselben Bezugszeichen verwendet.

Es zeigen:
- Fig. 1: eine erste Ausführungsform eines erfindungsgemäßen Anschlagpunktes in einer Einsetzstellung in einer perspektivischen Darstellung;
- Fig. 2a: den Anschlagpunkt aus Fig. 1 in einer Seitenansicht und in verschiedenen Schnittdarstellungen;
- Fig. 2b: den Anschlagpunkt aus Fig. 1 in einem Längsschnitt;
- Fig. 2c: den Anschlagpunkt aus Fig. 1 in einem Querschnitt im Bereich des Haltevorsprungs;
- Fig. 2d: den Anschlagpunkt aus Fig. 1 in einem Querschnitt im Bereich eines Abstützorgans;
- Fig. 3: den Anschlagpunkt aus Fig. 1 in einer Haltestellung in perspektivischer Ansicht;
- Fig. 4a-4d: den Anschlagpunkt in der Haltestellung aus Fig. 3 in verschiedenen Ansichten entsprechend den Fig. 2a-2d;
- Fig. 5a-5d: den Anschlagpunkt in der Haltestellung gemäß Fig. 4 in einer an einem Objekt fixierten Stellung in verschiedenen Ansichten entsprechend den Fig. 2a-2d;
- Fig. 6: eine zweite Ausführungsform des erfindungsgemäßen Anschlagpunktes; und
- Fig. 7: eine dritte Ausführungsform des erfindungsgemäßen Anschlagpunktes.

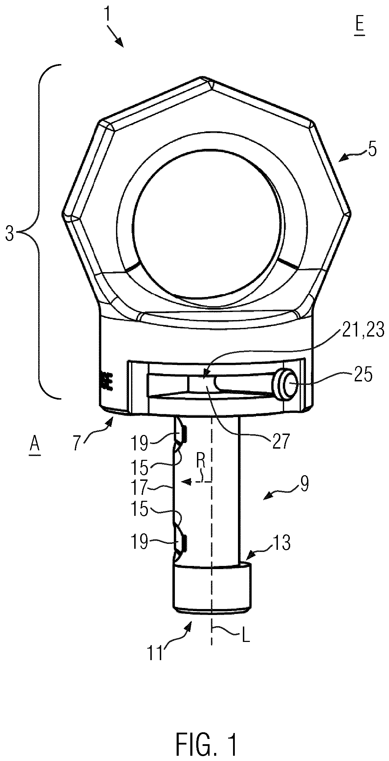

Im Folgenden ist der grobe Aufbau eines erfindungsgemäßen Anschlagpunktes 1 anhand der Fig. 1 beschrieben.

Fig. 1 zeigt eine erste vorteilhafte Ausführungsform eines erfindungsgemäßen Anschlagpunktes 1 in einer Einsetzstellung E. Der Anschlagpunkt 1 weist einen Anschlagbereich 3 auf. Der Anschlagbereich 3 kann zum Anschlagen eines Zurr-, Hebe- oder Anschlagmittels (nicht gezeigt) dienen. Dazu weist er bevorzugt eine Öse 5 auf. Alternativ dazu kann der Anschlagbereich 3 anstelle einer Öse auch einen Haken, einen Karabiner, einen Schäkel oder eine Anschlussstelle zur Verbindung mit einem anderen Teil aufweisen.

Der Anschlagbereich 3 weist ferner eine Auflagefläche 7 zur Auflage an einem Objekt auf. Vom Anschlagbereich 3 erstreckt sich der Schaft 9, welcher in eine hinterschnittene Öffnung eingesetzt werden kann. Der Schaft 9 erstreckt sich länglich entlang einer Schaftlängsachse L. Bevorzugt ist die Auflagefläche 7 senkrecht zur Schaftlängsachse L angeordnet.

An dem vom Anschlagbereich 3 abgewandten Ende 11 des Schaftes 9 weist der Anschlagpunkt 1 den Haltevorsprung 13 auf. Der Haltevorsprung 13 springt quer zur Schaftlängsachse L vom übrigen Schaft 9 vor. Der Haltevorsprung 13 ist unbeweglich mit dem Schaft 9 gebildet. In der dargestellten Ausführungsform zudem auch der Schaft 9 unbeweglich mit dem Anschlagbereich 3 gebildet. Dadurch sind also der Anschlagbereich 3 mit dem Schaft 9 und dieser mit dem Haltevorsprung 13 unbeweglich verbunden. Bevorzugt sind der Haltevorsprung 13, der Schaft 9 und der Anschlagbereich 3 monolithisch miteinander, beispielsweise durch Schmieden, gebildet.

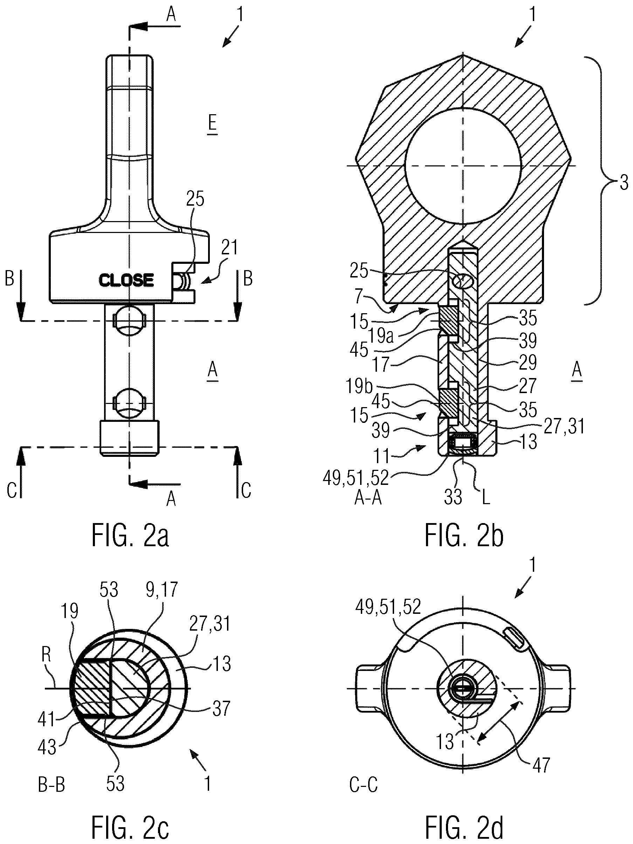

Der Schaft 9 weist zwei Durchdringungsöffnungen 15 in einer Wand 17 auf. In diesen können Abstützorgane 19 die Wand 17 des Schafts 9 durchdringen. Auf die Abstützorgane 19 und deren Funktion ist mit Bezug auf die Figuren 2a-2d, 4a-4d und 5a-5d näher eingegangen. In der Einsetzstellung E sind die Abstützorgane 19 bevorzugt so weit im Schaft 9 angeordnet, dass diese sich in radialer Richtung R nicht über die Wand 17 des Schafts 9 nach außen A erstrecken.

Im Anschlagbereich 3, bevorzugt zwischen der Auflagefläche 7 und der Öse 5, weist der Anschlagpunkt 1 das schlitzförmige Fenster 21 auf. Der Schlitz 23 des schlitzförmigen Fensters 21 erstreckt sich radial zur Schaftlängsachse L und damit parallel zur Auflagefläche 7. In dem Schlitz 23 ist ein Hebel 25 des Betätigungsorgans 27 bewegbar. Durch die Betätigung des Betätigungsorgans 27 können die Abstützorgane 19 bewegt werden. Dies ist mit Bezug auf die Fig. 2a-2d beschrieben.

Fig. 2a-2d zeigen den Anschlagpunkt der Fig. 1 in einer Seitenansicht mit Blickrichtung auf die Abstützorgane 19 und in drei verschiedenen Schnittdarstellungen, wobei die entsprechenden Schnitte in der Seitenansicht eingezeichnet sind. Wie Fig. 1, zeigen die Fig. 2a-2d den Anschlagpunkt 1 in der Einsetzstellung E.

Durch das Schaftinnere 29, welches durch die Wand 17 nach außen A abgegrenzt ist, erstreckt sich entlang der Schaftlängsachse L das Betätigungsorgan 27. Das Betätigungsorgan 27 ist bevorzugt als stiftförmige Welle 31 ausgebildet. Dabei ist eine Drehachse 33 der Welle 31 koaxial zu der Schaftlängsachse L angeordnet. Das Schaftinnere 29 kann beispielsweise durch ein Sackloch, welches sich vom dem Anschlagbereich abgewandten Ende 11 bis hin den Anschlagbereich 3 erstreckt, gebildet sein.

Im Anschlagbereich 3 erstreckt sich der Hebel 25 des Betätigungsorgans 27 durch das schlitzförmige Fenster 21, so dass das Betätigungsorgan 27 von außen A zugänglich bzw. betätigbar ist.

Das Betätigungsorgan 27 ist kraftübertragend mit den beiden Abstützorganen 19 gekoppelt. Eine Rotation des als Welle 31 ausgebildeten Betätigungsorgans 27 um die Drehachse 33 führt zu einer Translation der Abstützorgane 19 in einer radialen Richtung R. Das Betätigungsorgan 27 weist zwei Kraftübertragungsabschnitte 35 auf. Die Kraftübertragungsabschnitte 35 befinden sich in Richtung der Schaftlängsachse L gesehen auf Höhe der Abstützorgane 19.

In den Kraftübertragungsabschnitten 35 weist die Welle 31 einen von der Kreisform abweichenden Querschnitt auf. Der Querschnitt der Welle 31 in einem Kraftübertragungsabschnitt 35 ist in der Schnittdarstellung B-B dargestellt. In der bevorzugten Ausführungsform ist der Kraftübertragungsabschnitt 35 durch eine Querschnittsabflachung 37 gebildet. Durch die Querschnittsabflachung 37 sind in dem Betätigungsorgan 27 Ausnehmungen 39 gebildet. Die Ausnehmungen 39 sind in dem Längsschnitt A-A dargestellt.

Im Folgenden ist auf die Form der Abstützorgane 19 eingegangen. Anschließend ist auf das Zusammenspiel des Betätigungsorgans 27 mit den Abstützorganen 19 eingegangen.

Die Abstützorgane 19 sind entlang der Schaftlängsachse L voneinander beabstandet. Dabei ist ein erstes Abstützorgan 19a im Bereich der Auflagefläche 7 angeordnet. Ein zweites Abstützorgan 19b ist im Bereich des Haltevorsprungs 13 angeordnet. Auf diese Weise kann wirksam ein Verkippen des Anschlagpunktes 1 in einer Öffnung (hier nicht gezeigt) verhindert werden. Die Abstützorgane 19 sind aus dem Schaft 9 heraus bewegbar. Sie durchdringen die Wand 17 des Schafts 9 quer zur Schaftlängsachse L. In der Einsetzstellung E sind die Abstützorgane 19 in den Ausnehmungen 39 im Betätigungsorgan 27 angeordnet. Dabei liegen sie bevorzugt an den Querschnittsabflachungen 37 an.

Zur Anlage an den Querschnittsabflachungen 37 weisen die Abstützorgane 19 flache Rückseiten 41 auf. An ihren den Rückseiten 41 gegenüberliegenden Außenseiten 43 weisen die Abstützorgane 19 jeweils die Form einer Zylindermantelfläche auf. Dabei verläuft eine Zylinderachse parallel zur Schaftlängsachse L. Die Form der Außenseite 43 kann so gewählt sein, dass sie in etwa dem Verlauf einer Innenwand der Öffnung, in die der Anschlagpunkt gesetzt sein soll (hier nicht gezeigt) entspricht.

Alternativ dazu kann die Außenseite 43 zumindest in der Einsetzstellung E auch dem Oberflächenverlauf des Schafts 9 folgen. Dies ist in der Schnittdarstellung B-B dargestellt.

Zum leichteren Einsetzen des Anschlagpunkts 1 in eine Öffnung 61 weisen die Abstützorgane 19 Anlaufschrägen 45 auf. Die Anlaufschrägen 45 sind an den dem Ende 11 zugewandten Seiten der Abstützorgane 19 geformt. Sie steigen vom Ende 11 zum Anschlagbereich 3 hin an. Die Anlaufschrägen 45 können dazu dienen, die Abstützorgane 19 in das Schaftinnere 29 zu bewegen, wenn der Anschlagpunkt 1 in einen Öffnung eingesetzt wird.

Die Abstützorgane 19 können an ihren Rückseiten 41 sich quer zur Schaftlängsachse L erstreckende Querschnittsverbreiterungen 53 aufweisen, welche dazu dienen können, ein Herausfallen der Abstützorgane 19 aus dem Schaft 9, bzw. durch die Durchdringungsöffnungen 15 zu verhindern.

Als Gegenstücke zu den Querschnittsverbreiterungen 53 weist der Schaft 9 im Bereich der wenigstens einen Durchdringungsöffnung 15 Abdrückungen 54 auf, welche durch Formschluss mit den Querschnittsverbreiterungen 53 verhindern, dass das Abstützorgan 19 aus dem Schaft 9 herausfällt. Die Abdrückungen 54 können nach dem Einsetzen des Abstützorgans 19 in die Durchdringungsöffnung 15 geformt sein.

Bevorzugt sind die Abstützorgane 19 quer zur Schaftlängsachse L gesehen an dem dem Haltevorsprung 13 gegenüberliegenden Ende 11 des Schafts 9 angeordnet. im Bereich des Haltevorsprungs 13 weist der Schaft 9 bevorzugt einen kreisrunden Querschnitt auf. Der Durchmesser 47 des Schafts 9 im Bereich des Haltevorsprungs 13 ist bevorzugt geringfügig geringer als ein Innendurchmesser der Öffnung, für die der Anschlagpunkt 1 vorgesehen ist.

Im Schaftinneren 29 auf Höhe des Haltevorsprungs 13 ist bevorzugt ein Rückstellorgan 49 in Form einer Feder 51 angeordnet, welche sowohl mit dem Schaft 9 als auch mit dem Betätigungsorgan 27 verbunden ist, so dass das Rückstellorgan 49 eine Kraft auf das Betätigungsorgan 27 ausübt, welche das Betätigungsorgan 27 bevorzugt aus der Einsetzstellung E in eine Haltestellung (hier noch nicht gezeigt) bewegt. Die Feder 51 ist bevorzugt eine Spiralfeder, welche sich um die Schaftlängsachse L herum erstreckt. Das Rückstellorgan 49 bildet zugleich eine Sperreinrichtung 52, durch die der Anschlagpunkt 1 in der Haltestellung H gesichert ist.

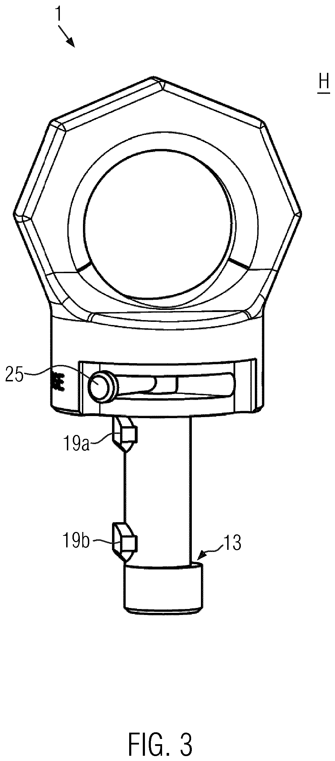

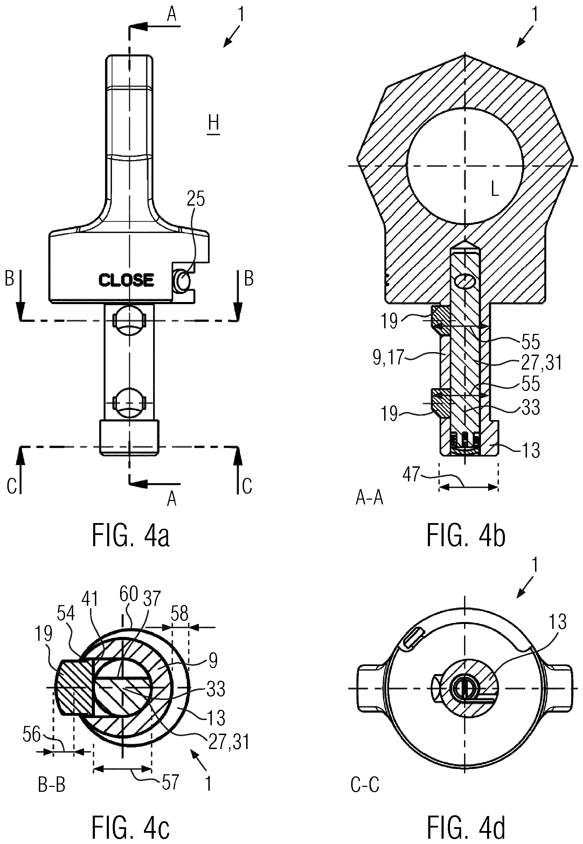

Die Fig. 3 und 4a-4d zeigen den Anschlagpunkt 1 aus den Fig. 1 und 2a-2d in der Haltestellung H. Der Kürze halber ist nur auf die Unterschiede zu der zuvor beschriebenen Einsetzstellung E eingegangen.

In der Haltestellung H sind die Abstützorgane 19 aus dem Schaft 9 heraus bewegt, so dass diese über die Wand 17 des Schafts 9 hervorstehen. Die Abstützorgane 19 sind dabei von dem Haltevorsprung 13 weg bewegt. In der Haltestellung H stehen die Abstützorgane 19 bevorzugt so weit aus dem Schaft 9 hervor, dass eine maximale Dicke 55 des Schafts 9 zusammen mit den überstehenden Abstützorganen 19 quer zur Schaftlängsachse L gesehen dem Durchmesser 47 des Endes 11 im Bereich des Haltevorsprungs 13 entspricht.

Mit anderen Worten: Der Überstand 56 der Abstützorgane 19 entspricht im wesentlichen dem Überstand 58 des Haltevorsprungs 13. Die Überstande 56 und 58 beziehen sich dabei jeweils auf den Abstand zum Außenumfang 60 des Schaftes 9.

Die Dicke 55 entspricht daher im Wesentlichen einem Innendurchmesser einer Öffnung, in die der Anschlagpunkt 1 eingesetzt werden soll. Dadurch kann der Anschlagpunkt 1 mit geringem oder ohne Spiel in einer Öffnung gehalten sein. Ebenso kann wirksam ein Verkippen quer zur Schaftlängsachse L verhindert werden.

Die Abstützorgane 19 wurden durch Betätigung des Betätigungsorgans 27 in die Haltestellung H bewegt. Dies kann beispielsweise dadurch erfolgt sein, dass der Hebel 25 des Betätigungsorgans 27 in die Haltestellung bewegt wurde. Die Bewegung des Betätigungsorgans 27 hat zu einer Rotation der Welle 31 um die Schaftlängsachse L bzw. um die Drehachse 33 geführt. Dadurch hat sich die Querschnittsabflachung 37 des Betätigungsorgans 27 von der Rückseite 41 des jeweiligen Abstützorgans 19 weg bewegt, so dass die Welle 31 mit ihrer vollen Breite 57 an der Rückseite 41 anliegt. In den Kraftübertragungsabschnitten 35 benötigt die Welle 31 also mehr Raum. Dieser wird durch sich nach außen bewegenden Abstützorgane 19 freigegeben.

Die Querschnittsabflachung 37 steht in der Haltestellung H bevorzugt senkrecht zu der Rückseite 41 des Abstützorgans 19. Bevorzugt liegt die Rückseite 41 von jedem der beiden Abstützorgane 19 an einem Bereich der Welle 31 an, in welchem sie ihre volle Wellenbreite 57 aufweist, und hat keinen Kontakt zu der Querschnittsabflachung 37. Auf diese Weise kann eine Kraftübertragung der Abstützorgane 19 auf die Welle 31 im Bereich der Querschnittsabflachungen 37 vermieden werden. Dies wiederum ist vorteilhaft um ein unerwünschtes Zurückspringen des Betätigungsorgans 27 in die Einsetzstellung zu vermeiden.

Zusätzlich kann zur Sicherheit beitragen, dass das als Feder 51 ausgebildete Rückstellorgan 49 das Betätigungsorgan 27 in der Haltestellung H hält, indem es eine Federkraft auf das Betätigungsorgan 27 in Richtung der Haltestellung H ausübt.

Alternativ oder zusätzlich kann der Anschlagpunkt 1 auch über wenigstens eine weitere Sperreinrichtung verfügen. Beispielsweise kann der Anschlagpunkt 1 über eine weitere Sperreinrichtung (hier nicht gezeigt) verfügen, welche das Betätigungsorgan 27, insbesondere den Hebel 25 formschlüssig gegen eine Bewegung aus der Haltestellung H heraus sichert. Beispielsweise könnte der Anschlagbereich 3 eine Raste, einen Splint oder einen Riegel aufweisen, welcher den Hebel 25 an einer Bewegung aus der Haltestellung H hindern kann.

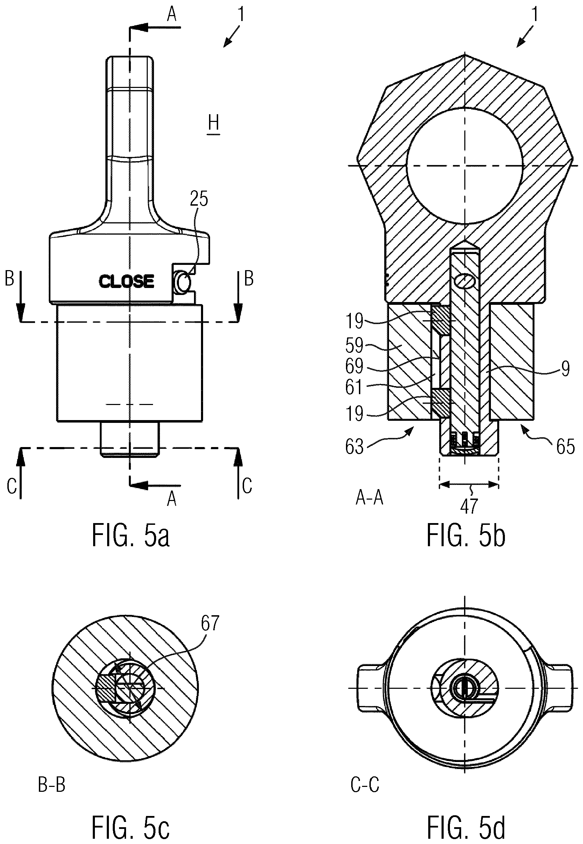

Im Folgenden ist die bereits mit Bezug auf die Fig. 3 und 4a-4d beschriebenen Haltestellung H des Anschlagpunkts 1 mit Bezug auf die Fig. 5a-5d erläutert. Der Anschlagpunkt 1 entspricht der zuvor beschriebenen Ausführungsform des Anschlagpunktes 1. Ebenso die Haltestellung H ist identisch zu der mit Bezug auf die Fig. 3 und 4a-4d beschriebenen Haltestellung H. Zusätzlich ist in Fig. 5a-5d eine Hülse 59 dargestellt, welche als Beispiel für ein Objekt mit einer hinterschnittenen Öffnung 61 dienen kann. Der Hinterschnitt 63 ist im Fall der Hülse 59 durch das Hülsenende 65 gebildet, bzw. durch diese freigegeben.

In der Haltestellung H sind, wie bereits beschrieben, die Abstützorgane 19 aus dem Schaft 9 heraus bewegt, so dass die Dicke 55 des Anschlagpunktes 1 auf Höhe der Abstützorgane 19 dem Durchmesser 67 der Öffnung 61 entspricht. Dadurch liegen beide Abstützorgane 19 lose oder unter Druck an der Wand 69 der Öffnung an. Eine Bewegung des Anschlagpunktes 1 quer zur Schaftlängsachse L kann dadurch wirksam verhindert sein.

Damit der Anschlagpunkt 1, bzw. dessen Schaft 9 leichtgängig in die Öffnung 61 eingesetzt werden kann, ist der Durchmesser 47 im Bereich des Haltevorsprungs 13 bevorzugt kleiner als der Innendurchmesser 67 der Öffnung 61.

Der Haltevorsprung 13 ist in dem Hinterschnitt 63 bzw. hinter dem Ende 65 der Hülse 59 angeordnet und liegt an der Hülse 59 an. Dadurch ist ein Formschluss zwischen dem Haltevorsprung 13 und der Hülse 59 in Richtung der Schaftlängsachse L gebildet und der Anschlagpunkt 1 ist sicher gehalten.

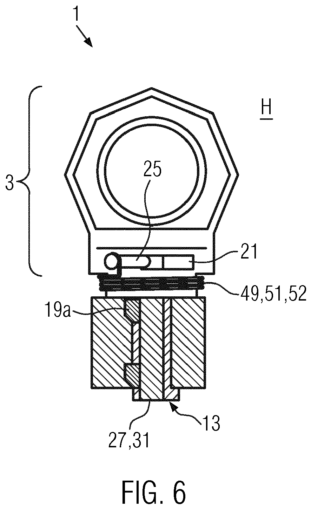

Fig. 6 zeigt eine zweite vorteilhafte Ausführungsform des erfindungsgemäßen Anschlagpunktes 1. Der Kürze halber ist nur auf die Unterschiede zur mit Bezug auf die Fig. 1 bis 5d beschriebenen ersten Ausführungsform eingegangen.

Die zweite Ausführungsform des Anschlagpunktes 1 verfügt nicht über ein Rückstellorgan 49, welches im Schachtinneren 29 angeordnet ist. Stattdessen besitzt diese ein als Feder 51 ausgebildetes Rückstellorgan 49, welches zwischen dem schlitzförmigen Fenster 21 und dem ersten Abstützorgan 19a angeordnet ist. Das Rückstellorgan 49 ist dabei als Spiralfeder 51 ausgebildet, welche außen um den Anschlagpunkt 1 im Anschlagbereich 3 gewickelt ist. Die Feder 51 ist am Hebel 25 und an einer nicht dargestellten Stelle am Anschlagpunkt 1 befestigt. Die Feder 51 ist bevorzugt so vorgespannt, dass sie eine Kraft auf den Hebel 25 in die Haltestellung H ausübt. Das Rückstellorgan 49 stellt eine Sperreinrichtung 52 für den Anschlagpunkt 1 dar.

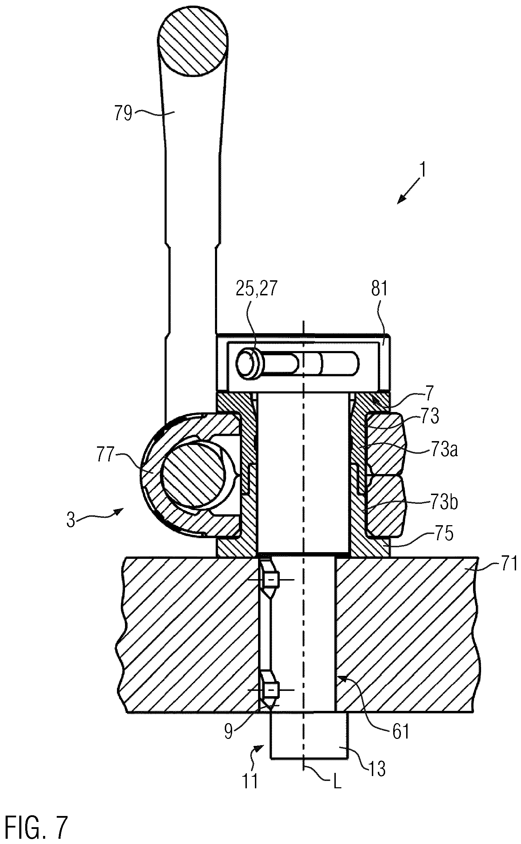

Eine dritte vorteilhafte Ausführungsform des erfindungsgemäßen Anschlagpunktes ist in Fig. 7 gezeigt. Der Anschlagpunkt 1 der dritten Ausführungsform weist bevorzugt einen Schaft 9 und einen Haltevorsprung 13 wie die mit Bezug auf die Fig. 1 bis 5d beschriebene erste Ausführungsform auf. Alternativ dazu kann der Anschlagpunkt 1 in diesem Bereich auch wie die mit Bezug auf Fig. 6 beschriebene zweite Ausführungsform ausgebildet sein.

Im Folgenden ist nur auf die Unterschiede zu den zuvor beschriebenen Ausführungsformen eingegangen.

Im Gegensatz zu den zuvor beschriebenen Ausführungsformen ist der Anschlagbereich 3 der dritten Ausführungsform gegenüber dem Schaft 9 drehbar gelagert.

Dazu liegt der Anschlagpunkt 1 mit seiner Auflagefläche 7 nicht direkt an dem die Öffnung 61 aufweisenden Objekt 71 an. Stattdessen besitzt der Anschlagpunkt 1 eine Lagerhülse 73, welche an der Auflagefläche 7 anliegt und vom Schaft 9 durchdrungen ist. Die Lagerhülse 73 erstreckt sich entlang der Schaftlängsachse L in Richtung auf das Ende 11 Schaftes 9.

In einem montierten Zustand, wie er in Figur 7 gezeigt ist, liegt ein unteres Ende 75 der Lagerhülse 73 an dem Objekt 71 an. Die Lagerhülse 73 ist bevorzugt als zweiteilige Lagerhülse 73, zusammengesetzt aus einem oberen Hülsenteil 73a und einem unteren Hülsenteil 73b, gebildet. Dadurch kann der Zusammenbau des Anschlagpunkts erleichtert sein. Alternativ dazu kann die Lagerhülse 73 auch einteilig gebildet sein.

Die Lagerhülse 73 ist bevorzugt unbeweglich mit dem Schaft 9 verbunden. Eine bewegliche Verbindung ist jedoch nicht ausgeschlossen.

Die Lagerhülse 73 durchdringt ein Verbindungsteil 77, welches mit einem Anschlagteil 79 versehen ist. Das Anschlagteil 79 kann eine Öse, ein Haken, einen Schäkel oder jedes andere geeignete Mittel zur Anbringung eines Anschlagmittels (nicht gezeigt) sein. Zwischen der Lagerhülse 73 und dem Verbindungsteil 77 kann sich wenigstens ein Wälzlager befinden. Geeignete Wälzlager sind beispielsweise Rollenlager oder Kugellager.

In der drehbaren Ausführungsform ist der Hebel 25 des Betätigungsorgans 27 an einem dem Ende 11 gegenüberliegenden, zum Anschlagbereich 3 gehörenden, Kopf 81 des Anschlagpunktes 1 zugänglich. Der Schlitz 23, durch welchen der Hebel 25 ragt, ist in diesem Kopf 81 angeordnet.

Alternativ zu der Ausführungsform mit einer Lagerhülse 73 kann der Anschlagpunkt 1 auch ein Verbindungsteil 77 aufweisen, welches ohne zwischenliegende Lagerhülse 75 von dem Schaft 9 durchdrungen ist.

### Bezugszeichen

- 1: Anschlagpunkt
- 3: Anschlagbereich
- 5: Öse
- 7: Auflagefläche
- 9: Schaft
- 11: Ende
- 13: Haltevorsprung
- 15: Durchdringungsöffnung
- 17: Wand des Schafts
- 19: Abstützorgane
- 21: Fenster
- 23: Schlitz
- 25: Hebel
- 27: Betätigungsorgan
- 29: Schaftinnere
- 31: Welle
- 33: Drehachse
- 35: Kraftübertragungsabschnitt
- 37: Querschnittsabflachung
- 39: Ausnehmung
- 41: Rückseite
- 43: Außenseite
- 45: Anlaufschräge
- 47: Durchmesser
- 49: Rückstellorgan
- 51: Feder
- 52: Sperreinrichtung
- 53: Querschnittsverbreiterung
- 54: Abdrückung
- 55: Dicke
- 56: Überstand des Abstützorgans
- 57: Wellenbreite
- 58: Überstand des Haltevorsprungs
- 59: Hülse
- 60: Umfang des Schafts
- 61: Öffnung
- 63: Hinterschnitt
- 65: Hülsenende
- 67: Innendurchmesser der Öffnung
- 69: Innenwand der Öffnung
- 71: Objekt
- 73: Lagerhülse
- 73a: Oberes Hülsenteil
- 73b: Unteres Hülsenteil
- 75: Unteres Ende der Lagerhülse
- 77: Verbindungsteil
- 79: Anschlagteil
- 81: Kopf

- A: Außen
- E: Einsetzstellung
- H: Haltestellung
- L: Schaftlängsachse
- R: Radiale Richtung

## Patentansprüche

1. Anschlagpunkt (1) zum Einsetzen in eine hinterschnittene Öffnung (61), wobei der Anschlagpunkt (1) einen Anschlagbereich (3) zum Anschlagen eines Zurr-, Hebe- oder Anschlagmittels, einen sich entlang einer Schaftlängsachse (L) von dem Anschlagbereich (3) weg erstreckenden Schaft (9) zum Einsetzen in die Öffnung (61) und, am von dem Anschlagbereich (3) abgewandten Ende (11) des Schaftes (9), einen quer zur Schaftlängsachse (L) vorspringenden Haltevorsprung (13) aufweist, wobeider Haltevorsprung (13) unbeweglich mit dem Schaft (9) verbunden ist, wobei der Anschlagpunkt (1) zwischen dem Haltevorsprung (13) und dem Anschlagbereich (3) wenigstens ein Abstützorgan (19) aufweist und wobei der Haltevorsprung (13) und das wenigstens eine Abstützorgan (19) relativ zueinander beweglich sind, **dadurch gekennzeichnet, dass** das wenigstens eine Abstützorgan (19) quer zur Schaftlängsachse (L) relativ zum Schaft (9) beweglich ausgebildet ist.

2. Anschlagpunkt (1) nach Anspruch 1, **dadurch gekennzeichnet, dass** eine Haltestellung (H) vorhanden ist, in der das wenigstens eine Abstützorgan (19) und der Haltevorsprung (13) sich diametral bezüglich der Schaftlängsachse (L) gegenüberliegend angeordnet sind.

3. Anschlagpunkt nach Anspruch 1 oder 2, **dadurch gekennzeichnet, dass** der Schaft (9) wenigstens zwei entlang der Schaftlängsachse (L) voneinander beabstandete Abstützorgane (19) aufweist.

4. Anschlagpunkt (1) nach Anspruch 3, **dadurch gekennzeichnet, dass** ein erstes Abstützorgan (19a) an einer schaftseitigen Auflagefläche (7) des Anschlagbereichs (3) und ein zweites Abstützorgan (19b) an dem Haltevorsprung (13) angeordnet ist.

5. Anschlagpunkt (1) nach einem der Ansprüche 1 bis 4, **dadurch gekennzeichnet, dass** das wenigstens eine Abstützorgan (19) aus dem Schaft (9) heraus bewegbar ist.

6. Anschlagpunkt (1) nach Anspruch 5, **dadurch gekennzeichnet, dass** das wenigstens eine Abstützorgan (19) eine Wand (17) des Schafts (9) quer zur Schaftlängsachse (L) durchdringt.

7. Anschlagpunkt (1) nach einem der Ansprüche 1 bis 6, **dadurch gekennzeichnet, dass** das wenigstens eine Abstützorgan (19) an einer Außenseite (43) die Form einer Zylindermantelfläche aufweist.

8. Anschlagpunkt (1) nach einem der Ansprüche 1 bis 7, **dadurch gekennzeichnet, dass** das wenigstens eine Abstützorgan (19) wenigstens eine vom Ende (11) zum Anschlagbereich (3) hin ansteigende Anlaufschräge (45) aufweist.

9. Anschlagpunkt (1) nach einem der Ansprüche 1 bis 8, **dadurch gekennzeichnet, dass** der Anschlagpunkt (1) ein am Anschlagbereich (3) zugängliches Betätigungsorgan (27) aufweist, das kraftübertragend mit dem wenigstens einen Abstützorgan (19) gekoppelt ist.

10. Anschlagpunkt (1) nach Anspruch 9, **dadurch gekennzeichnet, dass** das wenigstens eine Betätigungsorgan (27) als im Schaftinneren (29) angeordnete Welle (31) ausgebildet ist, deren Drehachse (33) koaxial mit der Schaftlängsachse (L) ausgebildet ist.

11. Anschlagpunkt (1) nach Anspruch 10, **dadurch gekennzeichnet, dass** die Welle (31) zur Kraftübertragung an das wenigstens eine Abstützorgan (19) zumindest in wenigstens einem Kraftübertragungsabschnitt (35) einen von einer Kreisform abweichenden Querschnitt aufweist.

12. Anschlagpunkt (1) nach einem der Ansprüche 9 bis 11, **dadurch gekennzeichnet, dass** der Anschlagpunkt (1) wenigstens ein Rückstellorgan (49) aufweist, welches mit dem wenigstens einen Betätigungsorgan (27) gekoppelt ist durch das das Betätigungsorgan (27) in die Haltestellung (H) bewegbar ist.

13. Anschlagpunkt (1) nach Anspruch 12, **dadurch gekennzeichnet, dass** das wenigstens eine Rückstellorgan (49) als im Schaftinneren (29) angeordnete Feder (51) ausgebildet ist, die, eine Federkraft vermittelnd, sowohl mit dem Schaft (9) als auch mit dem Betätigungsorgan (27) verbunden ist.

## Claims

1. Stop point (1) for insertion into an undercut opening (61), wherein the stop point (1) has a stop region (3) for stopping a lashing, lifting or stopping means, a shaft (9) extending along a longitudinal axis (L) of the shaft, away from the stop region (3), for insertion into the opening (61) and, at that end (11) of the shaft (9) facing away from the stop region (3), a holding protrusion (13) that projects crosswise to the longitudinal axis (L) of the shaft, wherein the holding protrusion (13) is immovably connected to the shaft (9), wherein the stop point (1) has at least one support element (19) between the holding protrusion (13) and the stop region (3), and wherein the holding protrusion (13) and the at least one support element (19) can be moved relative to one another,
**characterised in that**
the at least one support element (19) is designed to be movable relative to the shaft (9), crosswise to the longitudinal axis (L) of the shaft.

2. Stop point (1) according to claim 1, **characterised in that** there is a holding position (H) in which the at least one support element (19) and the holding protrusion (13) are arranged diametrically opposite one another in relation to the longitudinal axis (L) of the shaft.

3. Stop point according to claim 1 or 2, **characterised in that** the shaft (9) has at least two support elements (19) spaced apart from one another along the longitudinal axis (L) of the shaft.

4. Stop point (1) according to claim 3, **characterised in that** a first support element (19a) is arranged on a shaft-side contact surface (7) of the stop region (3) and a second support element (19b) is arranged on the holding protrusion (13).

5. Stop point (1) according to one of the claims 1 to 4, **characterised in that** the at least one support element (19) can be moved out of the shaft (9).

6. Stop point (1) according to claim 5, **characterised in that** the at least one support element (19) penetrates a wall (17) of the shaft (9), crosswise to the longitudinal axis (L) of the shaft.

7. Stop point (1) according to one of the claims 1 to 6, **characterised in that** the at least one support element (19) has the shape of a lateral cylinder surface on an outer side (43).

8. Stop point (1) according to one of the claims 1 to 7, **characterised in that** the at least one support element (19) has at least one lead-in slope (45) rising from the end (11) towards the stop region (3).

9. Stop point (1) according to one of the claims 1 to 8, **characterised in that** the stop point (1) has an actuator (27) which is accessible at the stop region (3) and which is coupled to the at least one support element (19) in such a way as to transmit force.

10. Stop point (1) according to claim 9, **characterised in that** the at least one actuator (27) is designed as a spindle (31) which is arranged in the shaft interior (29), and whose rotational axis (33) is designed to be coaxial with the longitudinal axis (L) of the shaft.

11. Stop point (1) according to claim 10, **characterised in that** for transmitting force to the at least one support element (19), the spindle (31) has a cross section that deviates from a circular shape at least in at least one force transmission section (35).

12. Stop point (1) according to one of the claims 9 to 11, **characterised in that** the stop point (1) has at least one reset element (49) which is coupled to the at least one actuator (27), through which the actuator (27) can be moved into the holding position (H).

13. Stop point (1) according to claim 12, **characterised in that** the at least one reset element (49) is designed as a spring (51) which is arranged in the shaft interior (29), and which, whilst exerting a spring force, is connected to both the shaft (9) and the actuator (27).

## Revendications

1. Point d'accrochage (1) destiné à être inséré dans une ouverture el contre-dépouille (61), dans lequel le point d'accrochage (1) présente une zone d'accrochage (3) pour l'accrochage d'un moyen d'arrimage, de levage ou d'accrochage, une tige (9) s'étendant le long d'un axe longitudinal de tige (L) à distance de la zone d'accrochage (3) et destinée à être insérée dans l'ouverture (61) et, à l'extrémité (11) de la tige (9) opposée à la zone d'accrochage (3), une partie saillante de retenue (13) faisant saillie transversalement par rapport à l'axe longitudinal de tige(L), dans lequel la partie saillante de retenue (13) est reliée de manière fixe à la tige (9), dans lequel le point d'accrochage (1) présente au moins un élément d'appui (19) entre la partie saillante de retenue (13) et la zone d'accrochage (3) et dans lequel la partie saillante de retenue (13) et le au moins un élément d'appui (19) sont mobiles l'un par rapport à l'autre, **caractérisé en ce que** le au moins un élément d'appui (19) est conçu pour être mobile par rapport à la tige (9) transversalement par rapport à l'axe longitudinal de tige (9).

2. Point d'accrochage (1) selon la revendication 1, **caractérisé en ce qu'**une position de retenue (H) est prévue, dans laquelle le au moins un élément d'appui (19) et la partie saillante de retenue (13) sont agencés diamétralement opposés par rapport à l'axe longitudinal de tige (L).

3. Point d'accrochage selon la revendication 1 ou 2, **caractérisé en ce que** la tige (9) présente au moins deux éléments d'appui (19) espacés l'un de l'autre le long de l'axe longitudinal de tige (L).

4. Point d'accrochage (1) selon la revendication 3, **caractérisé en ce qu'**un premier élément d'appui (19a) est agencé sur une surface d'appui côté tige (7) de la zone d'accrochage (3) et un second élément d'appui (19b) est agencé sur la partie saillante de retenue (13).

5. Point d'accrochage (1) selon l'une quelconque des revendications 1 à 4, **caractérisée en ce que** le au moins un élément d'appui (19) peut être déplacé hors de la tige (9).

6. Point d'accrochage (1) selon la revendication 5, **caractérisé en ce que** le au moins un élément d'appui (19) traverse une paroi (17) de la tige (9) transversalement par rapport à l'axe longitudinal de tige (L).

7. Point d'accrochage (1) selon l'une quelconque des revendications 1 à 6, **caractérisé en ce que** le au moins un élément d'appui (19) présente sur une face extérieure (43) la forme d'une surface d'enveloppe de cylindre.

8. Point d'accrochage (1) selon l'une quelconque des revendications 1 à 7, **caractérisé en ce que** le au moins un élément d'appui (19) présente au moins une pente d'amorce (45) montant de l'extrémité (11) vers la zone d'accrochage (3).

9. Point d'accrochage (1) selon l'une quelconque des revendications 1 à 8, **caractérisé en ce que** le point d'accrochage (1) présente un élément d'actionnement (27) disponible sur la zone d'accrochage (3), qui est couplé par transmission de force au au moins un élément d'appui (19).

10. Point d'accrochage (1) selon la revendication 9, **caractérisé en ce que** le au moins un élément d'actionnement (27) est réalisé sous la forme d'un arbre (31) agencé à l'intérieur de la tige (29), dont l'axe de rotation (33) est réalisé coaxial à l'axe longitudinal de tige (L).

11. Point d'accrochage (1) selon la revendication 10, **caractérisé en ce que** l'arbre (31) présente une section transversale différente d'une forme circulaire pour une transmission de force à au moins un élément d'appui (19) dans au moins une section de transmission de force (35).

12. Point d'accrochage (1) selon l'une quelconque des revendications 9 à 11, **caractérisé en ce que** le point d'accrochage (1) présente au moins un élément de rappel (49) qui est couplé au au moins un élément d'actionnement (27), par l'intermédiaire duquel l'élément d'actionnement (27) peut être déplacé dans la position de retenue (H).

13. Point d'accrochage (1) selon la revendication 12, **caractérisé en ce que** le au moins un élément de rappel (49) est réalisé sous la forme d'un ressort (51) agencé dans l'intérieur de tige (29), qui transmet une force de ressort et est relié à la fois à la tige (9) et à l'élément d'actionnement (27).
